# EUROPEAN PATENT APPLICATION

(11) **EP 2 369 574 A1**
(43) Date of publication of application: **28.09.2011**
(21) Application number: 10769540.5
(22) Date of filing: 09.02.2010
(51) Int. Cl.: G09G 3/36, G02F 1/133, G02F 1/1335, G09G 3/20

(54) **DISPLAY APPARATUS**

(30) Priority: 28.04.2009 JP 2009109388
(71) Applicant: Sharp Kabushiki Kaisha, Osaka-shi, Osaka 545-8522 (JP)
(72) Inventor: HIROKANE, Masahito, Osaka 545-8522 (JP)
(74) Representative: Goddar, Heinz J.
(86) International application number: PCT/JP2010/051872
(87) International publication number: WO 2010/125840

(57) **Abstract**

A display apparatus capable of reducing unevenness in color resulting from the viewing angle property of a curved portion of a seamless lens is provided. The display apparatus is provided with the seamless lens on the front side of a display surface. The display apparatus includes: a video signal input portion for inputting a video signal; and an image conversion portion for subjecting, for each horizontal line, of display images obtained from video signals inputted by the video signal input portion, those corresponding to a curved portion of the seamless lens to image conversion.

## Description

### Technical Field

The present invention relates to a display apparatus, and more particularly to a display apparatus provided with a seamless lens.

### Background Art

In recent years, liquid crystal display apparatuses have been used widely in, for example, liquid crystal display televisions, monitors, mobile phones and the like as flat panel displays having advantages such as being thin and lightweight over conventional cathode-ray tubes. Such liquid crystal display apparatuses use a plurality of liquid crystal panels. In a liquid crystal display apparatus, voltage signals, each of which corresponds to a value of gray scale at which each pixel should display an image, are supplied to a plurality of pixels to perform display operation, thereby images are displayed on the display surface of the liquid crystal panel.

By the way, in a liquid crystal display apparatus, unevenness may develop on the screen as a result of the display brightness on the screen locally becoming darker or brighter than desired brightness. Such unevenness is ascribable to, for example, variations in thickness of liquid crystal display cells and of electrode patterns within a liquid crystal display apparatus. In order to improve the quality and yields of liquid crystal display apparatuses, it is necessary to devise a way to correct unevenness in brightness of images displayed on a liquid crystal panel.

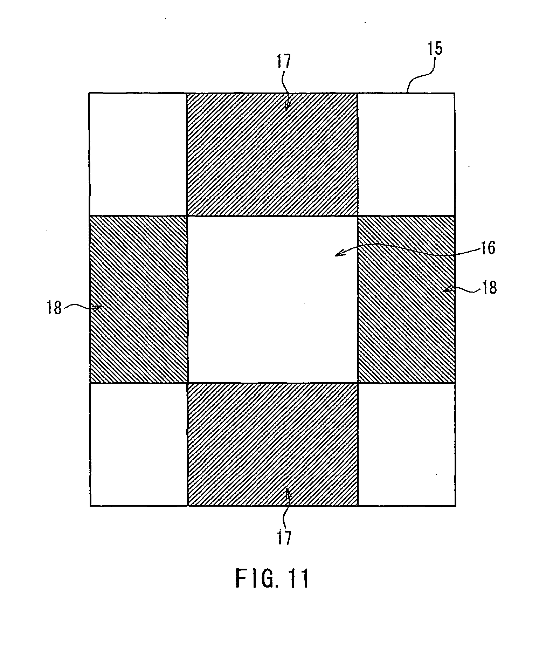

Some types of image brightness unevenness depend upon the data of an image to be displayed and one of such types of unevenness is crosstalk. Crosstalk is a phenomenon as follows. As shown in FIG. 11, when a certain pattern 16 is displayed on a part of a display area 15 of a liquid crystal panel, variations in brightness occur, due to the pattern 16, in areas 17 located above and below the pattern or in areas 18 located on the left and right sides of the pattern.

As a result, even when the surroundings of the pattern 16 are supposed to be displayed at, for example, uniform brightness (the same gray scale), unevenness in the brightness develops. Variations in brightness that occur in the portions located above and below the pattern 16 are referred to as vertical crosstalk and variations in brightness that occur in the portions located on the left and right sides of the pattern 16 are referred to as horizontal crosstalk.

One of the causes of horizontal crosstalk is variations in common electrode potential resulting from capacitive coupling between a data bus line and a common electrode. A common electrode is an electrode that spreads across the entire display area. A liquid crystal layer is present between the data bus line and the common electrode, and this causes the capacitive coupling.

One of the causes of vertical crosstalk is variations in pixel potential resulting from capacitive coupling between the data bus line and a pixel electrode. A parasitic capacitance between the drain and the source of a thin film transistor is present between the data bass line and the pixel electrode. When the potential of the data bus line varies after writing the potential of data into a certain pixel, the variation in potential propagate to the pixel electrode through capacitive coupling, causing a variation in the already-written pixel potential.

As a result, when, for example, the pattern 16 has different brightness from its surroundings as in FIG. 11, variations in brightness occur in the areas 17 located above and below the pattern 16. Hence, there has been proposed a technique for reducing crosstalk by correcting display data to be supplied to a data driver by the same amount as the variation in the potential of the common electrode or the variation in the potential of the pixel electrode to correct a data potential to be written into each pixel by the data driver through the data bus line (see Patent document 1, for example).

By the way, seamless liquid crystal display apparatuses have become widely available recently. In these liquid crystal display apparatuses, a lens is provided on the front side of the display surface of a liquid crystal panel to give such an appearance that as if the display surface does not have a frame. Even in such seamless liquid crystal display apparatuses, unevenness in color may develop on the screen.

### Prior art document

### Patent document

Patent Document 1: JP 2006-243267

### Disclosure of Invention

### Problem to be Solved by the Invention

Previously, however, for seamless liquid crystal display apparatuses, there was no technique for reducing unevenness in color caused by a seamless lens. Thus, the present invention is made in view of this problem. That is, it is an object of the present invention to provide a display apparatus capable of reducing unevenness in color resulting from the viewing angle property of a curved portion of a seamless lens.

### Means for Solving Problem

In order to achieve the above object, the display apparatus according to the present invention is a display apparatus provided with a seamless lens on the front side of a display surface. The display apparatus includes: a video signal input portion for inputting a video signal; and an image conversion portion for subjecting, for each horizontal line, of display images obtained from video signals inputted by the video signal input portion, those corresponding to a curved portion of the seamless lens to image conversion.

Because of the above configuration, it is possible to provide a display apparatus capable of reducing unevenness in color resulting from the viewing property of the curved portion of the seamless lens.

The display apparatus according to the present invention further includes a gray-scale table storing an input gray scale and an output gray scale of each of the video signals from which the display images corresponding to the curved portion of the seamless lens are obtained. The input gray scale and the output gray scale are associated with each other in the gray-scale table. The image conversion portion subjects, for each horizontal line, the display images corresponding to the curved portion of the seamless lens to the image conversion with reference to the gray-scale table.

Because of the above configuration, it is possible to correct the gray scale of a video signal corresponding to the curved portion of the seamless lens. Thus, a display apparatus capable of reducing unevenness in color resulting from the viewing property of the curved portion of the seamless lens can be provided.

The display apparatus according to the present invention further includes an RGB gray-scale table storing RGB input gray scales and RGB output gray scales of each of the video signals from which the display images corresponding to the curved portion of the seamless lens are obtained. The RGB input gray scales and the RGB output gray scales are associated with each other in the RGB gray-scale table. The image conversion portion subjects, for each horizontal line, the display images corresponding to the curved portion of the seamless lens to the image conversion with reference to the RGB gray-scale table.

Because of the above configuration, it is possible to correct each of RGB gray scales of a video signal corresponding to the curved portion of the seamless lens. Thus, a display apparatus capable of reducing unevenness in color resulting from the viewing property of the curved portion of the seamless lens can be provided.

In the display apparatus according to the present invention, the image conversion portion decimates, as the image conversion, the display images corresponding to the curved portion of the seamless lens by horizontal line to compress the display images.

Because of the above configuration, it is possible to compress the images indicated by the video signals corresponding to the curved portion of the seamless lens. Thus, a display apparatus capable of reducing unevenness in color resulting from the viewing property of the curved portion of the seamless lens can be provided.

In the display apparatus according to the present invention, the display apparatus is preferably a liquid crystal display apparatus.

### Effects of the Invention

According to the present invention, it is possible to provide a display apparatus capable of reducing unevenness in color resulting from the viewing angle property of a curved portion of a seamless lens.

### Brief description of the drawings

[FIG. 1A] FIG. 1A is a schematic diagram showing a liquid crystal display apparatus according to one embodiment of the present invention.
[FIG. 1B] FIG. 1B is a cross-sectional view showing the liquid crystal display apparatus according to one embodiment of the present invention.
[FIG. 1C] FIG. 1C is a diagram for explaining a display apparatus provided with a seamless lens.
[FIG. 1D] FIG. 1D is a diagram showing the viewing angle property of a curved portion of the seamless lens.
[FIG. 2] FIG. 2 is a block diagram showing an overall configuration of a liquid crystal display apparatus according to Embodiment 1 of the present invention.
[FIG. 3] FIG. 3 is a diagram showing an exemplary gray-scale table.
[FIG. 4] FIG. 4 is a flowchart showing the operation of gray-scale correction processing.
[FIG. 5] FIG. 5 is a block diagram showing an overall configuration of a liquid crystal display apparatus according to Embodiment 2 of the present invention.
[FIG. 6] FIG. 6 is a diagram showing an exemplary RGB gray-scale table.
[FIG. 7] FIG. 7 is a flowchart showing the operation of gray-scale correction processing.
[FIG. 8] FIG. 8 is a block diagram showing an overall configuration of a liquid crystal display apparatus according to Embodiment 3 of the present invention.
[FIG. 9] FIG. 9 is a diagram for explaining image compression.
[FIG. 10] FIG. 10 is a flowchart showing the operation of image compression processing.
[FIG. 11] FIG. 11 is a diagram showing a conventional example.

### Description of the Invention

### [Embodiment 1]

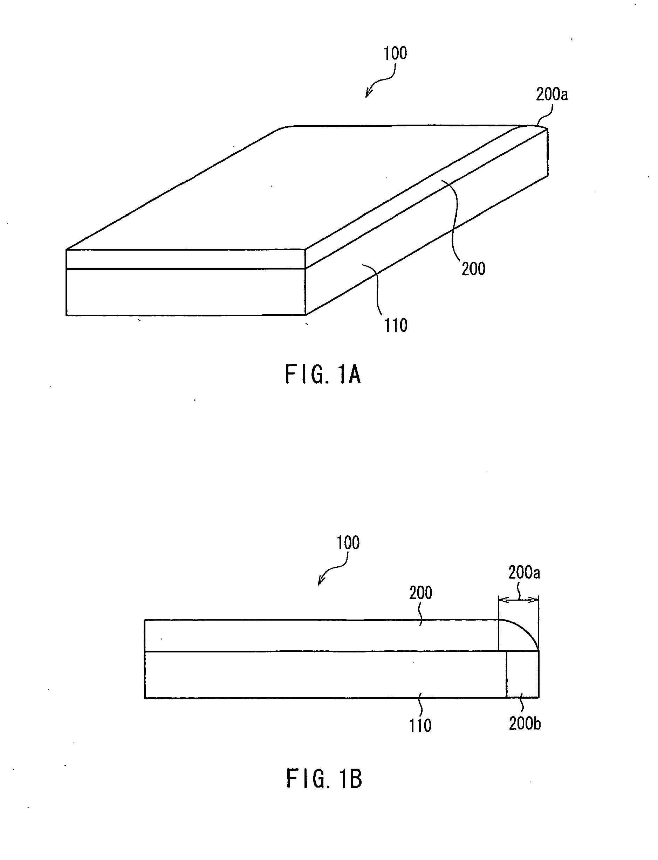

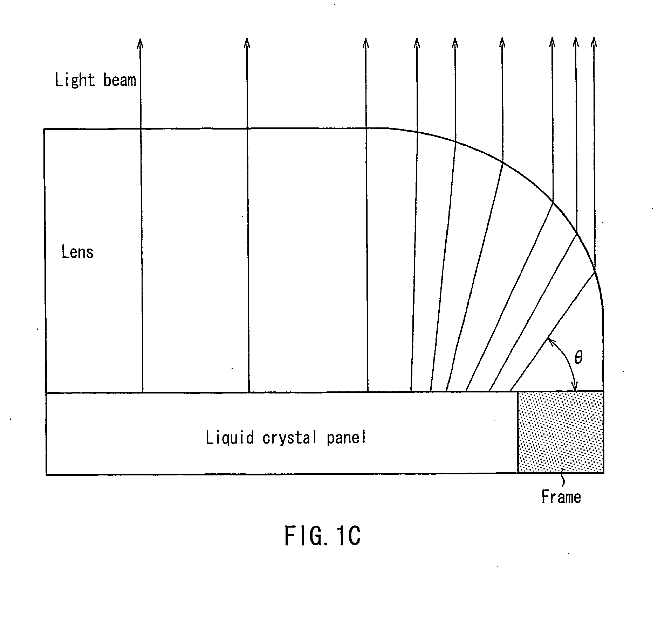

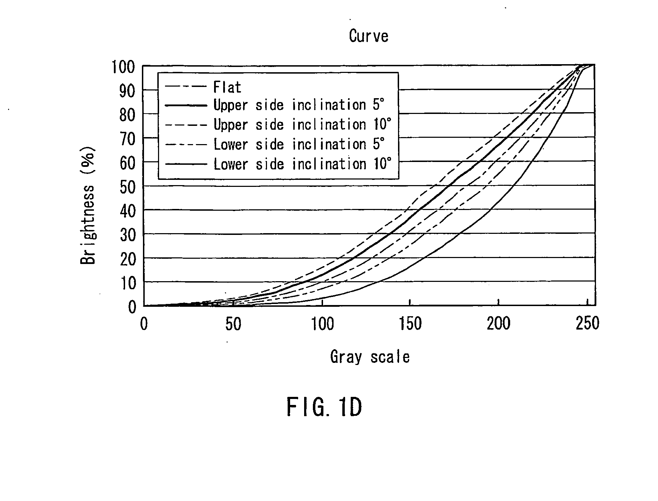

FIG. 1A is a schematic diagram showing a liquid crystal display apparatus according to Embodiment 1 of the present invention, and FIG. 1B is a cross-sectional view showing the liquid crystal display apparatus according to Embodiment 1 of the present invention. As shown in FIG. 1A, the liquid crystal display apparatus 100 according to Embodiment 1 includes a liquid crystal panel 110 as a display portion, a seamless lens 200 provided on the front side of the liquid crystal panel 110, and a backlight (not shown) as an illuminating device for irradiating transmission light necessary for displaying images on the liquid crystal panel 110. As shown in FIG. 1B, the seamless lens provided on the front side of the display surface of the liquid crystal panel has an edge having a curved surface, and the edge forms a curved portion 200a. The curved portion 200a of the seamless lens is placed on a frame 200b of the liquid crystal panel 110. As a result, images are also displayed on the frame portion. The use of the seamless lens may result in unevenness in color. One cause of this unevenness in color is the viewing angle property of the curved portion 200a at the edge of the seamless lens. As shown in FIG. 1C, the optical length of a light beam differs between the portions where the surface of the seamless lens is curved and not curbed, resulting in the viewing angle property as shown in FIG. 1D. Thus, when a viewing angle is shifted to view the display surface of the liquid crystal panel, the color of an image that is displayed on the display surface of the liquid crystal panel corresponding to the curved portion of the seamless lens may become uneven due to the viewing angle property of the curved portion of the seamless lens. For this reason, display images need to be subjected to the processing described below. Of the seamless lens, a portion where the surface is curved can be also referred to as a lens portion and a portion where the surface is flat can be also referred to as a non-lens portion. It should be noted that a video display circuit for performing signal processing for displaying images, a control circuit for locally adjusting the coloration and brightness of the backlight as an active backlight, a driving circuit, and the like are not shown in FIG. 1.

The liquid crystal panel 110 is a transmission type display element that displays images by controlling the amount of light transmitted through pixels. The type of the liquid crystal panel 110 is not limited as long as images can be displayed at multi-gray scale, and may be of an active matrix type using switching elements such as TFTs or a simple matrix type. Further, the liquid crystal panel 110 may be of any of various liquid crystal display modes such as a vertically-aligned (VA) mode type, an IPS type, and an OCB type.

Since any conventionally known liquid crystal panel can be used as the liquid crystal panel 110 of the present invention, the liquid crystal panel 110 will not be described in detail with reference to the drawings, but the liquid crystal panel 110 includes a liquid crystal layer (not shown), a pair of transparent substrates (not shown) that sandwich the liquid crystal layer therebetween, and a pair of polarizing plates (not shown) each provided on the outer surface of each transparent substrate (not shown). Further, the liquid crystal panel 110 is provided with a driver circuit for driving the liquid crystal panel 110, which is connected to a driving circuit as the display apparatus through a flexible printed board or the like.

For example, the liquid crystal panel 110 according to Embodiment 1 is an active matrix type liquid crystal panel, and is configured to drive the liquid crystal layer pixel by pixel by supplying scanning signals and data signals respectively to scanning lines and data lines arranged in a matrix form. More specifically, when a switching element (TFT) provided in the vicinity of each intersection of a scanning line and a data line is turned on by a signal supplied to the scanning line, a data signal is written into a pixel electrode through the data line, and the alignment of liquid crystal molecules changes in accordance with the potential level of the data signal, whereby each pixel displays an image at the gray scale corresponding to the data signal. That is, in the liquid crystal panel 110, the polarization of incident light from the backlight through the polarizing plate is modulated by the liquid crystal layer, and the amount of light passing through the polarizing plate to the viewer side is controlled, whereby a desired image is displayed.

The backlight is composed of a plurality of light sources (not shown) each having a plurality of LEDs as light-emitting elements and disposed on a bottom surface of a bottomed and frame-shaped chassis (not shown) made of a metal or a resin. In the backlight of the liquid crystal display apparatus according to the present embodiment, each light source has one each of LEDs of three colors of R (red), G (green), and B (blue).

An irradiation surface as the back surface of the liquid crystal panel 110 is irradiated with irradiation light from the backlight. Further, the backlight of the liquid crystal display apparatus of the present embodiment is of an active backlight type that controls the color and luminance of irradiation light from each light source based on an image to be displayed on the liquid crystal panel 110, thereby locally changing the color and brightness of irradiation light with which the back side of the liquid crystal panel 110 is irradiated from the backlight.

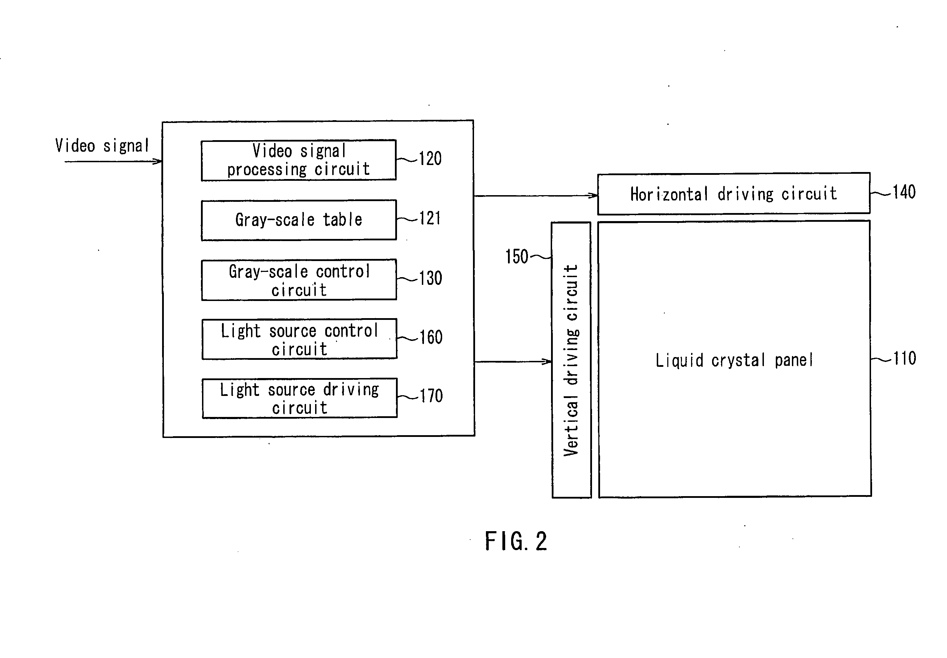

Next, signal processing performed in the liquid crystal display apparatus of the present embodiment in displaying images will be described with reference to FIG. 2. FIG. 2 is a block diagram showing the overall configuration of the liquid crystal display apparatus 100 according to Embodiment 1. As shown in FIG. 2, a video signal processing circuit 120 generates an image signal and a light source control signal based upon an input video signal.

The light source control signal is a signal for controlling, in response to the image signal defining an image to be displayed on the liquid crystal panel 110, the color and luminance of irradiation light from the backlight. In the active backlight type adopted in the present embodiment, irradiation light from the light sources is controlled in response to the image to be displayed on the liquid crystal panel 110. For example, for a portion where a dark image is displayed, irradiation light from the light sources is dimmed, or for a portion where a monochrome image is displayed, the color of irradiation light from the light source is matched to the color of the display image.

Thus, as compared with a conventional backlight that always keeps irradiating the entire display area of a liquid crystal panel with a maximum amount of light, it is possible to reduce the power consumption of the backlight, to eliminate so-called backlight bleeding to improve the contrast of display images, and to display images with high color purity

The image signal is a signal that defines a gray scale to be assigned to each pixel of the liquid crystal panel 110 as a display portion. That is, the image signal controls the transmittance of each pixel. Generally, the image signal is provided as a video signal defining an image to be displayed by the liquid crystal display apparatus, and serves as a gray-scale signal for each of RGB sub-pixels forming each pixel of the liquid crystal panel 110.

In response to a gray-scale signal for each pixel obtained from a video signal corresponding to the curved portion of the seamless lens that covers the frame of the display surface, the video signal processing circuit 120 (image conversion portion) refers to a gray-scale table 121 to read a gray-scale correction value for each horizontal line and converts the input gray scale into the output gray scale.

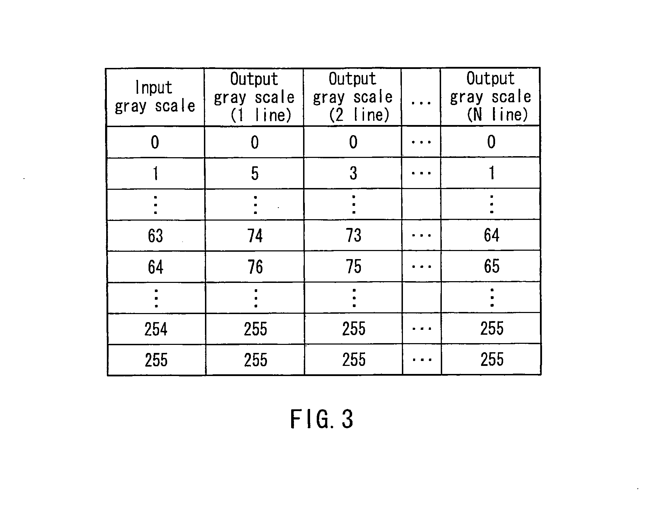

For example, as shown in FIG. 3, the gray-scale table 121 is a table that stores, as a correction value, a preset output gray scale corresponding to an input gray scale of a video signal for each horizontal line of the liquid crystal panel 110. For example, at the time of manufacturing the apparatus, the value of the angle θ shown in FIG. 1C (upper side inclination shown in FIG. 1D) is calculated, and a gray scale that does not cause unevenness in color is determined from the graph shown in FIG. 1D and is preset as the correction value. For example, when an input gray scale is "63", the output gray scale at 1st line is "74", the output gray scale at 2nd line is "73", and the output gray scale at Nth line is "64".

The image signal is inputted to a gray-scale control circuit 130 and then is divided into a horizontal driving signal and a vertical driving signal so that a single image can be displayed by vertical and horizontal scanning. The horizontal driving signal and the vertical driving signal drive a horizontal driving circuit 140 and a vertical driving circuit 150, respectively. Then, in the liquid crystal panel 110, the gray-scale signals for displaying images are supplied to pixels in sequence from the horizontal driving circuit 140 through data lines in response to scanning lines that have been selected in sequence by the vertical driving circuit 150, thereby forming a display image.

The light source control signal is inputted to a light source control circuit 160. The light source control circuit 160 generates a light source driving signal that instructs each of the plural light sources in regard to the color and luminance of irradiation light therefrom. As described above, each light source in the present embodiment has R,G, and B LEDs as light-emitting elements, so that the light source driving signal instructs each of the RGB LEDs included in each light sources in regard to the essentially required emission brightness.

The light source control circuit 160 subjects the light source driving signal to brightness correction (which will be described later) as needed, and converts the signal into brightness data. The brightness data, which determines the actual emission brightness of each LED as a light-emitting element, is applied to a light source driving circuit 170 as an LED driver. Then, the light source driving circuit 170 controls a voltage or current to be applied to each LED individually, and supplies it to each LED through a connection line.

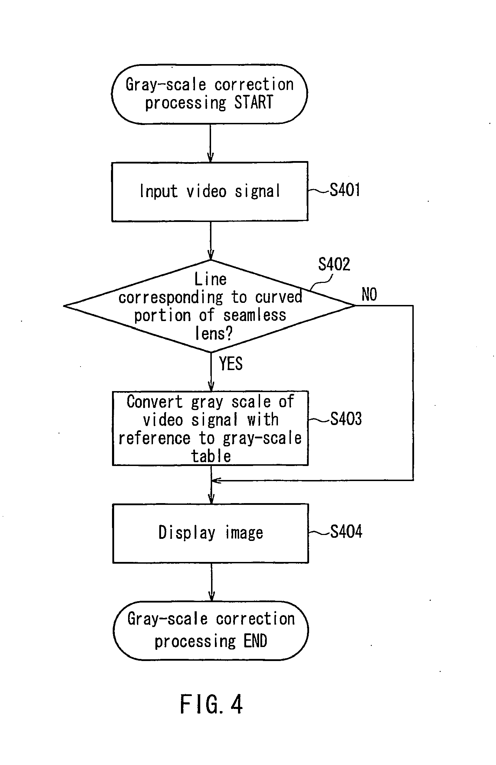

Hereinafter, the operation of gray-scale correction processing performed in the liquid crystal display apparatus 100 according to Embodiment 1 of the present invention will be described with reference to the flowchart of FIG. 4.

First, when a video signal is inputted (step S401), the video signal processing circuit 120 determines, based on the pre-stored positions of horizontal lines on the frame of the display surface of the liquid crystal panel 110, whether or not the video signal is for any of the lines corresponding to the curved portion of the seamless lens (step S402). For example, given that information that horizontal lines up to 10th line from above are on the frame is pre-stored, the video signal processing circuit 120 determines that any video signal supplied to for the 1st to 10th horizontal lines is a video signal for the lines corresponding to the curved portion.

When it is determined at step S402 that the video signal is for any of the lines corresponding to the curved portion of the seamless lens, the video signal processing circuit 120 refers to the gray-scale table 121 to read a gray-scale correction value for each horizontal line, and converts the input gray scale of the video signal corresponding to the curved portion of the seamless lens that covers the frame of the display surface into the output gray scale (step S403). For each horizontal line, the video signal processing circuit 120 determines whether or not video signals correspond to the lens portion, and only when the signals correspond to the lens portion, converts the data in sequence with reference to the gray-scale table stored in the memory. Then, the video signal processing circuit 120 allows the image obtained as a result of the conversion at step S403 to be displayed (step S404).

On the other hand, when it is determined at step S402 that the video signal is not for any of the lines corresponding to the curved portion of the seamless lens, the video signal processing circuit 120 allows the image to be displayed without correcting the gray scale of a video signal that corresponds to the curved portion of the seamless lens that covers the frame of the display surface (step S402 to step S404).

As described above, according to the present embodiment, it is possible to correct the gray scale of a video signal that corresponds to the curved portion of the seamless lens that covers the frame of the display surface. Thus, a display apparatus capable of reducing unevenness in color resulting from the viewing angle property of the curved portion of the seamless lens can be provided.

### [Embodiment 2]

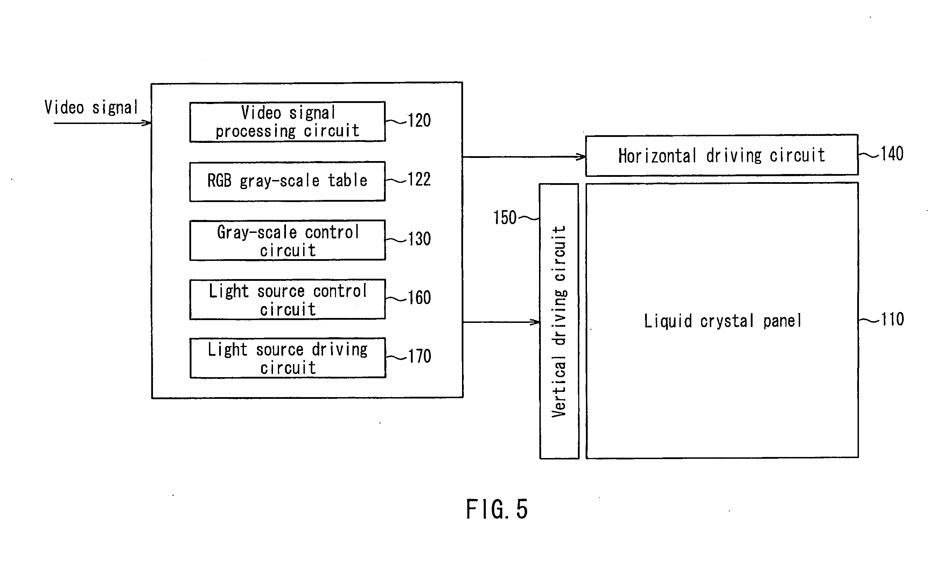

FIG. 5 is a block diagram showing the overall configuration of the liquid crystal display apparatus 100 according to Embodiment 2. It should be noted that the liquid crystal display apparatus 100 of Embodiment 2 is different from that of Embodiment 1 in the function of the video signal processing circuit 120 and in including an RGB gray-scale table 122 used for correcting each of RGB gray scales independently.

In response to a gray-scale signal for each pixel of the liquid crystal panel 110 obtained from a video signal corresponding to the curved portion of the seamless lens that covers the frame of the display surface, the video signal processing circuit 120 refers to the RGB gray-scale table 122 to read gray-scale correction values, and converts the RGB input gray scales into the RGB output gray scales independently.

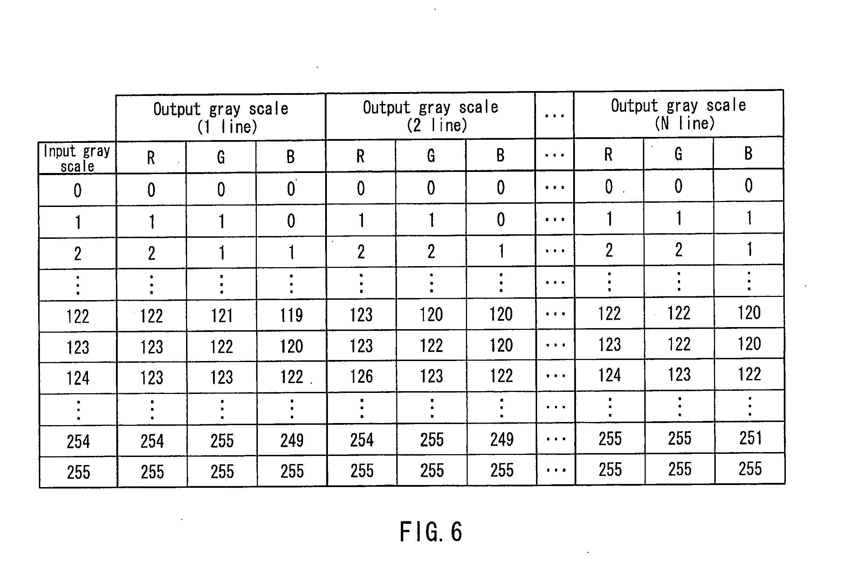

For example, as shown in FIG. 6, the RGB gray-scale table 122 is a table that stores, as correction values, preset RGB output gray scales corresponding to RGB input gray scales of a video signal for each horizontal line on the frame of the display surface of the liquid crystal panel 110. For example, when an input gray scale is "122", the output gray scales of R, G, and B at the 1st line are "122", "121", and "119", respectively, the output gray scales of R, G, and B at the 2nd line are "123", "120", and "120", respectively, and the output gray scales of R, G, and B at the Nth line are "122", "122", and "120", respectively.

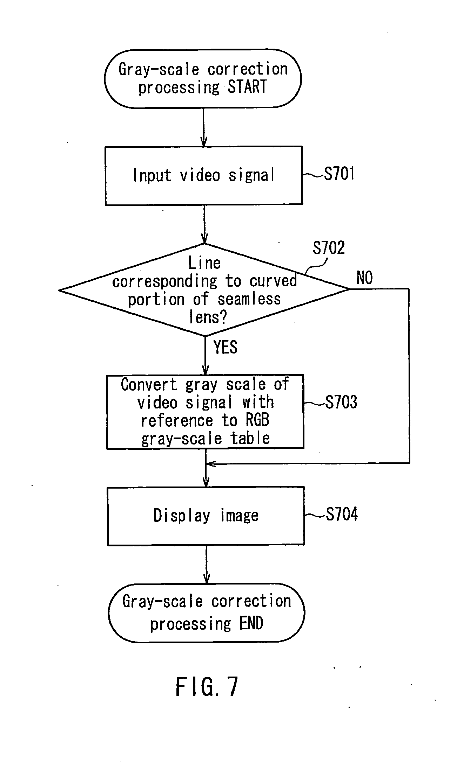

Hereinafter, the operation of gray-scale correction processing performed in the liquid crystal display apparatus 100 according to Embodiment 2 of the present invention will be described with reference to the flowchart of FIG. 7.

First, when a video signal is inputted (step S701), the video signal processing circuit 120 determines, based on the pre-stored positions of horizontal lines on the frame of the display surface of the liquid crystal panel 110, whether or not the video signal is for any of the lines corresponding to the curved portion of the seamless lens (step S702).

When it is determined at step S702 that the video signal is for any of the lines corresponding to the curved portion of the seamless lens, the video signal processing circuit 120 refers to the RGB gray-scale table 122 to read gray-scale correction values for each horizontal line, and converts the RGB input gray scales of the video signal corresponding to the curved portion of the seamless lens that covers the frame of the display surface into the RGB output gray scales (step S703). That is, since variations in chromaticity occur due to chromatic aberration of the lens or the color of the lens itself, the chromaticity varies between the lens portion and the non-lens portion. For this reason, the gray-scale table preset in the memory is referenced to correct the chromaticity Then, the video signal processing circuit 120 allows the image obtained as a result of the conversion at step S703 to be displayed (step S704).

On the other hand, when it is determined at step S702 that the video signal is not for any of the lines corresponding to the curved portion of the seamless lens, the video signal processing circuit 120 allows the image to be displayed without correcting the gray scales of a video signal that corresponds to the curved portion of the seamless lens that covers the frame of the display surface (step S702 to step S704).

As described above, according to the present embodiment, it is possible to correct each of RGB gray scales of the video signal corresponding to the curved portion of the seamless lens that covers the frame of the display surface. Thus, a display apparatus capable of reducing unevenness in color resulting from the viewing angle property of the curved portion of the seamless lens can be provided.

### [Embodiment 3]

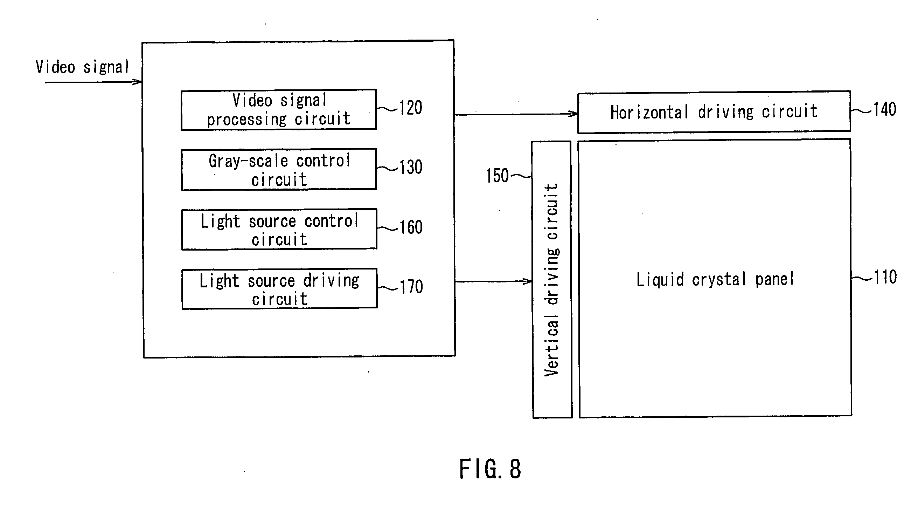

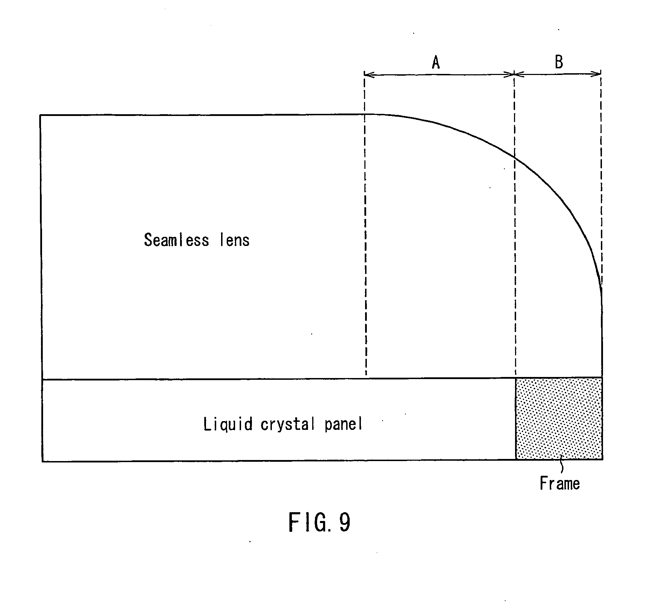

FIG. 8 is a schematic block diagram showing the overall configuration of the liquid crystal display apparatus 100 according to Embodiment 3. It should be noted that the liquid crystal display apparatus 100 of the present embodiment is different from those of Embodiments 1 and 2 in the function of the video signal processing circuit 120. Because video is expanded by the seamless lens, it is necessary to compress the video so as to display the same video as the input image. As shown in FIG. 9, the video seen by the viewer is expanded by (A+B)/A times. Thus, it is necessary to correct the image at the curved portion of the seamless lens by compressing the image by A/(A+B) times. The video signal processing circuit 120 decimates images displayed on pixels obtained from video signals corresponding to the curved portion of the seamless lens that covers the frame of the display surface by horizontal line so as to compress the images. However, since the compression of the images at the lens portion results in a reduction in the image size, it is necessary to increase the input video size by B. For example, given that A = 30 lines and B = 10 lines, a module having a resolution of 800 × RGB × 600 is used to change the size of the input image to 800 × RGB × 610.

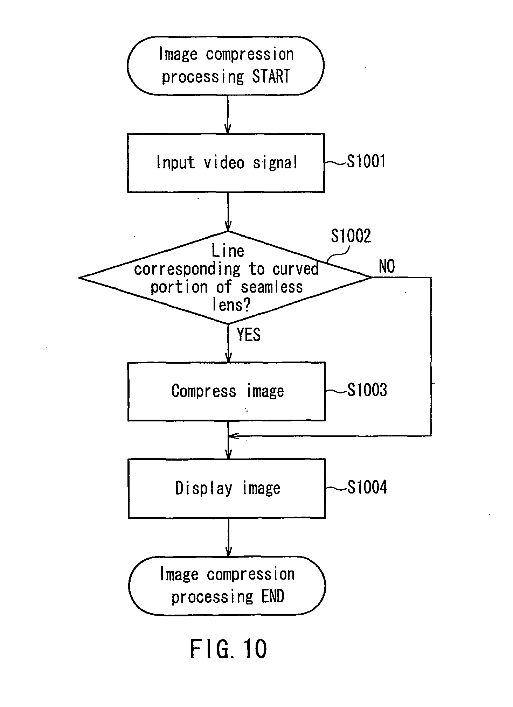

Hereinafter, the operation of image compression processing performed in the liquid crystal display apparatus 100 according to Embodiment 3 of the present invention will be described with reference to the flowchart of FIG. 10.

First, when a video signal is inputted (step S1001), the video signal processing circuit 120 determines, based on the pre-stored positions of horizontal lines on the frame of the display surface of the liquid crystal panel 110, whether or not the video signal is for any of the lines corresponding to the curved portion of the seamless lens (step S1002).

When it is determined at step S1002 that the video signal is for any of the lines corresponding to the curved portion of the seamless lens, the video signal processing circuit 120 decimate images displayed on pixels obtained from the video signal corresponding to the curved portion of the seamless lens that covers the frame of the display surface by horizontal line so as to compress the images (step S1003). Then, the video signal processing circuit 120 allows the images obtained as a result of the compression at step S1003 to be displayed (step S1004).

On the other hand, when it is determined at step S1002 that the video signal is not for any of the lines corresponding to the curved portion of the seamless lens, the video signal processing circuit 120 allows the image to be displayed without compressing the image indicated by the video signal that corresponds to the curved portion of the seamless lens that covers the frame of the display surface (step S1002 to step S1004).

As described above, according to the present embodiment, it is possible to compress the image indicated by the video signal corresponding to the curved portion of the seamless lens that covers the frame of the display surface. Thus, a display apparatus capable of reducing unevenness in color resulting from the viewing angle property of the curved portion of the seamless lens can be provided.

It should be noted that the ways to reduce unevenness in color resulting from the viewing angle property of the curved portion of the seamless lens are not limited to the correction methods described respectively in the above embodiments. Thus, unevenness in color may be corrected by calculating an input video signal. The configurations described in the above embodiments merely show specific examples and they do not limit the technical scope of the present invention. Any configuration can be adopted so long as the effects of the present invention can be produced.

### Description of Reference Numerals

- 100: liquid crystal display apparatus
- 110: liquid crystal panel
- 120: video signal processing circuit
- 121: gray-scale table
- 122: RGB gray-scale table
- 130: gray-scale control circuit
- 140: horizontal driving circuit
- 150: vertical driving circuit
- 160: light source control circuit
- 170: light source driving circuit

## Claims

1. A display apparatus provided with a seamless lens on a front side of a display surface, the display apparatus comprising:
a video signal input portion for inputting a video signal; and
an image conversion portion for subjecting, for each horizontal line, of display images obtained from video signals inputted by the video signal input portion, those corresponding to a curved portion of the seamless lens to image conversion.

2. The display apparatus according to claim 1, further comprising a gray-scale table storing an input gray scale and an output gray scale of each of the video signals from which the display images corresponding to the curved portion of the seamless lens are obtained, the input gray scale and the output gray scale being associated with each other in the gray-scale table,
wherein, the image conversion portion subjects, for each horizontal line, the display images corresponding to the curved portion of the seamless lens to the image conversion with reference to the gray-scale table.

3. The display apparatus according to claim 1, further comprising an RGB gray-scale table storing RGB input gray scales and RGB output gray scales of each of the video signals from which the display images corresponding to the curved portion of the seamless lens are obtained, the RGB input gray scales and the RGB output gray scales being associated with each other in the RGB gray-scale table,
wherein the image conversion portion subjects, for each horizontal line, the display images corresponding to the curved portion of the seamless lens to the image conversion with reference to the RGB gray-scale table.

4. The display apparatus according to claim 1, wherein the image conversion portion decimates, as the image conversion, the display images corresponding to the curved portion of the seamless lens by horizontal line to compress the display images.

5. The display apparatus according to any one of claims 1 to 4, wherein the display apparatus is a liquid crystal display apparatus.
